# EUROPÄISCHE PATENTSCHRIFT

(11) **EP 2 854 300 B1**
(45) Veröffentlichungstag und Bekanntmachung des Hinweises auf die Patenterteilung: **20.06.2018**
(21) Anmeldenummer: 13186664.2
(22) Anmeldetag: 30.09.2013
(51) Int. Cl.: H04B 3/54, H02M 5/40, H02J 7/34, H02J 9/00

(54) **Umrichtersystem, Pitchsystem mit einem Umrichtersystem und Verfahren zum Betrieb eines Umrichtersystems**
Converter system, pitch system with a converter system and method for operating a converter system
Système de convertisseur, système de pitch doté d'un système de convertisseur et procédé de fonctionnement d'un système de convertisseur

(43) Veröffentlichungstag der Anmeldung: 01.04.2015
(73) Patentinhaber: Moog Unna GmbH, 59423 Unna (DE)
(72) Erfinder: Pauli, Matthias, 33181 Bad Wünnenberg (DE)
(74) Vertreter: Schmalz, Günther

(56) Entgegenhaltungen:
- EP-A1- 1 892 791
- WO-A2-2011/136591
- DE-A1- 19 520 596
- US-A1- 2002 037 054
- US-A1- 2011 134 976
- US-A1- 2013 099 705

## Beschreibung

Die Erfindung betrifft ein Umrichtersystem mit einem Gleichrichter und wenigstens zwei Wechselrichtern, wobei der Gleichrichter von einer Wechselstromquelle mit Energie versorgbar ist, der Gleichrichter zur Energieversorgung mit jedem der Wechselrichter über einen gemeinsamen Gleichstromkreis verbunden ist und jeder Wechselrichter mit jeweils mindestens einem elektrischen Verbraucher zur Energieversorgung des jeweiligen Verbrauchers oder der jeweiligen Verbraucher verbindbar ist.

Ein derartiges Umrichtersystem dient der Energieversorgung mehrerer elektrischer Verbraucher aus einer Wechselstromquelle. Die Wechselstromquelle kann zum Beispiel das allgemeine Stromnetz oder ein Generator sein. Durch den Gleichrichter wird die durch die Wechselstromquelle bereitgestellte Wechselspannung in eine Gleichspannung gleichgerichtet. Diese Gleichspannung wird in den gemeinsamen Gleichstromkreis gespeist. An Stelle des Begriffs Gleichstromkreis sind auch die Bezeichnungen Gleichspannungskreis und DC-Link üblich und können synonym verwendet werden. Die Wechselrichter können dem Gleichstromkreis elektrische Energie entnehmen und mit dieser elektrischen Energie elektrische Verbraucher betreiben.

Die US 7,126,236 B2 offenbart ein Verfahren und ein System zur Energieversorgung von wenigstens einem Gleichstrommotor einer Windenergieanlage, wobei das System einen Brückengleichrichter, der mit einer Energiequelle verbunden ist, um eine Gleichspannung zu erzeugen und diese dem wenigstens einen Gleichstrommotor zur Verfügung zu stellen, und einen Zwischenkreiskondensator aufweist, der die Gleichspannung glättet und als Energiespeicher und Energiequelle für den wenigstens einen Gleichstrommotor fungiert. Ferner wird offenbart, dass eine Mehrzahl an Gleichstrommotoren verwendet wird, die von separaten Antriebssystemen mit Energie versorgt werden, wobei die Zwischenkreise dieser Antriebssysteme miteinander verbunden sind, so dass Energie zwischen diesen Zwischenkreisen ausgetauscht werden kann.

Die US 7,740448 B2 offenbart eine Vorrichtung zum Steuern des Anstellwinkels eines Rotorflügels einer Windkraftanlage, wobei die Vorrichtung aufweist: ein Anstellwinkel-Steuersystem, das einen MOSFET-basierenden Leistungsumformer aufweist; einen Gleichspannungskreis mit einem Gleichspannungskreiskondensator und dafür konfiguriert ist, über den MOSFET-basierenden Leistungsumrichter Energie an das Anstellwinkel-Steuersystem zu liefern; eine Quelle für Wechselstromeingangsenergie zum Liefern von Energie an den Gleichspannungskreis; und eine Reservebatterie, die dafür konfiguriert ist, keine Energie an den Gleichspannungskreis zu liefern, wenn volle Wechselstromeingangsenergie zur Verfügung steht; und wobei ferner die Vorrichtung dafür konfiguriert ist: in dem Gleichspannungskreiskondensator gespeicherte Energie zu nutzen, um während eines Verlustes oder Einbruchs von Wechselstromeingangsenergie über den MOSFET-basierenden Leistungsumrichter Energie an das Anstellwinkel-Steuersystem zu liefern; und Ladung auf dem Gleichspannungskreiskondensator unter Verwendung der Reservebatterie aufrechtzuerhalten, sobald die Spannung über dem Gleichspannungskreiskondensator während der Lieferung von Energie an das Anstellsteuersystem absinkt; wobei die Wechselstromquelle eine nichtregenerative Quelle ist, und der Gleichspannungskreis für mehrere Anstellwinkel-Motorsysteme gemeinsam ist; und wobei ferner die Aufrechterhaltung von Ladung auf dem Gleichspannungskreiskondensator unter Verwendung der geladenen Reservebatterie ferner die Zuführung von Strom aus der Reservebatterie zu dem gemeinsamen Gleichspannungskreis umfasst.

Aus US 2013/0099705 A1 ist eine Motorenanordnung bekannt, welche einen Wandler, einen Inverter, einen Spannungsdetektor und eine numerische Steuerung umfasst. Der Wandler wandelt eine Eingangswechselspannung in einen Gleichstrom und der Inverter, wandelt den Gleichstrom des Wandlers in einen Wechselstrom zum Ansteuern eines Elektromotors. Der Spannungsdetektor überwacht die Spannung gleichstromseitig und erhöht den Stromverbrauch des Elektromotors, wenn die überwachte Spannung einen vorbestimmten Grenzwert überschreitet.

DE 195 20 596 A1 offenbart eine Anordnung zum Übertragen von Daten und Energie, welche zur Verbesserung der Ausfallsicherheit über zwei Busleitungen verfügt, wobei die erste Busleitung eine Gleichspannungsleitung und die zweite Busleitung entweder eine Gleich- oder Wechselspannungsleitung ist. Die Voraussetzung für diese Art der ausfallsicheren Kommunikation ist allerdings dass bei Nutzung von einer Gleichspannungsbusleitung und einer Wechselstrombusleitung die miteinander kommunizierenden Geräte so ausgestaltet sein müssen, dass sie wahlweise mit Gleichstrom oder mit Wechselstrom versorgt werden können.

Aus WO 2011/136591 A2 ist ein für Innenräume geeignetes Gleichstromversorgungssystem bekannt, an welches mittels Gleichrichtern wechselspannungsgespeiste Geräte sich an das Gleichstromversorgungssystem ankoppeln können. Die Wechselspannungsgeräte verfügen wechselspannungsseitig über Modulatoren/Demodulatoren welche eine Kommunikation der Wechselspannungsgeräte über das Gleichstromversorgungssystem ermöglichen.

Ein anderes System zur Kommunikation über eine Gleichstromversorgung ist auf dem Gebiet der Satellitentechnik, beziehungsweise Fahrzeugtechnik aus US 2011/0134976 A1 bekannt. US 2002/0037054 A1 hingegen befasst sich mit Gleichstromübertragung über Koaxialkabel in der Datentechnik und im Speziellen über sogenannte Cat-5 Kabel,.

Die aus dem Stand der Technik bekannten Umrichtersysteme weisen den Nachteil auf, dass zur Informationsübertragung zwischen Gleichrichter und den Wechselrichtern stets separate Signalleitungen verwendet werden müssen. Dies erhöht durch die zusätzlich notwendigen Signalleitungen die Kosten des Umrichtersystems. Ferner ist die Produktion des Umrichtersystems aufwändiger, da die separaten Signalleitungen einen höheren Montageaufwand nach sich ziehen. Da diese Signalleitungen in der Regel deutlich dünner ausgeführt sind als die Kabel des Gleichstromkreises, sind diese Signalleitungen deutlich empfindlicher und können zum Beispiel bei

Wartungsarbeiten leichter beschädigt werden. Alternativ zu separaten Signalleitungen können Informationen zwischen dem Gleichrichter und den Wechselrichtern auch drahtlos übertragen werden, insbesondere durch elektromagnetische Strahlung wie zum Beispiel Funk oder Infrarotlicht. Jedoch ist die Zuverlässigkeit dieser alternativen Übertragungsarten oftmals nicht zufriedenstellend und bietet nur geringe bis keine Kostenvorteile.

Die Erfindung betrifft ferner ein Pitchsystem einer Windenergieanlage mit einem Umrichtersytem und ein Verfahren zum Betrieb eines Umrichtersystems mit einem Gleichrichter und wenigstens zwei Wechselrichtern, wobei der Gleichrichter von einer Wechselstromquelle mit Energie versorgt wird, der Gleichrichter zur Energieversorgung mit jedem der Wechselrichter über einen gemeinsamen Gleichstromkreis verbunden ist und jeder Wechselrichter mit jeweils einem elektrischen Verbraucher zur Energieversorgung des jeweiligen Verbrauchers verbunden ist.

Damit ist es die Aufgabe der Erfindung, ein Umrichtersystem, ein Pitchsystem mit einem Umrichtersystem und ein Verfahren zum Betrieb eines Umrichtersystems anzugeben, die besonders kostengünstig und robust sind.

Die zuvor hergeleitete und aufgezeigte Aufgabe ist ausgehend von dem eingangs beschriebenen Umrichtersystem dadurch gelöst, dass der Gleichrichter eine Modulationsvorrichtung aufweist, um dem Gleichstromkreis ein Signal aufzumodulieren, wobei wenigstens einer der Wechselrichter eine Demodulationsvorrichtung aufweist, um ein dem Gleichstromkreis aufmoduliertes Signal zu demodulieren.

Mittels der Modulationsvorrichtung kann der Gleichrichter dem Gleichstromkreis ein Signal aufmodulieren und dieses Signal über den Gleichstromkreis zu den Wechselrichtern übertragen. Die Modulation kann auf verschiedene Arten erfolgen. Insbesondere kann der durch den Gleichrichter erzeugten Gleichspannung ein Spannungssignal überlagert werden. Das Spannungssignal kann hierbei zum Beispiel eine Amplitudenmodulation oder eine Winkelmodulation, wie zum Beispiel eine Phasen- oder Frequenzmodulation aufweisen. Auch Mischformen, wie die Vektormodulation, sind denkbar. Digitale Modulationstechniken, wie insbesondere die Pulsweitenmodulation oder die Puls-Code-Modulation können ebenso eingesetzt werden. Durch die Demodulationsvorrichtung kann das dem Gleichstromkreis aufmodulierte Signal demoduliert und von dem Wechselrichter weiterverwendet werden. Das demodulierte Signal kann insbesondere dazu verwendet werden einen mit dem Wechselrichter verbundenen elektrischen Verbraucher zu steuern oder zu regeln. Dies kann zum Beispiel dadurch erfolgen, dass das Signal von dem Wechselrichter dazu genutzt wird den elektrischen Verbraucher gezielt mit Energie zu versorgen. Dies heißt insbesondere, dass das Signal den elektrischen Verbraucher indirekt über die Energieversorgung durch den Wechselrichter steuert oder regelt.

Überraschenderweise hat sich herausgestellt, dass die Übertragung von Signalen über den Gleichstromkreis eine geringe Störanfälligkeit aufweist. Es ist zusätzlich jedoch möglich die Leitungen des Gleichstromkreises gegen einstrahlende Störungen von außen abzuschirmen oder die Umgebung vor störenden Abstrahlungen aus dem Gleichstromkreis abzuschirmen. Dadurch, dass die im Stand der Technik üblichen separaten Signalleitungen eingespart werden können, ergeben sich Kostenvorteile durch die erfindungsgemäße Lehre. Diese Kostenvorteile bleiben sogar bestehen, wenn man die zusätzlichen Kosten durch die notwendigen Modulations- und Demodulationsvorrichtungen mit berücksichtigt.

Bei einer besonders vorteilhaften Ausgestaltung der Erfindung ist vorgesehen, dass wenigstens einer der Verbraucher ein Wechselstrommotor oder ein Gleichstrommotor ist. Erfindungsgemäß können sowohl Wechselstrommotoren als auch Gleichstrommotoren durch die Wechselrichter betrieben werden. Dem Fachmann ist bekannt, dass der Begriff Wechselrichter auch eine Familie von Bauteilen umfasst, die aus einer am Eingang des Wechselrichters anliegenden Gleichspannung eine Spannung beliebiger Frequenz und Phase und somit sowohl Gleichspannung als auch Wechselspannung erzeugen können. Ein Beispiel hierfür sind Brückenwechselrichter mit Halbleiterschaltelementen.

Gemäß einer vorteilhaften Weiterbildung der Erfindung ist vorgesehen, dass wenigstens einer der Wechselrichter eine Modulationsvorrichtung aufweist, um dem Gleichstromkreis ein Signal aufzumodulieren. Sofern einer der Wechselrichter eine Modulationsvorrichtung aufweist, kann er mit dieser Modulationsvorrichtung dem Gleichstromkreis ein Signal aufmodulieren. Dieses Signal kann, falls ein anderer Wechselrichter eine Demodulationsvorrichtung aufweist von dieser Demodulationsvorrichtung demoduliert werden. Auf diese Weise können die einzelnen Wechselrichter untereinander kommunizieren. Hierbei ist es besonders vorteilhaft, wenn alle Wechselrichter sowohl eine Modulationsvorrichtung als auch eine Demodulationsvorrichtung aufweisen.

Eine vorteilhafte Ausgestaltung der Erfindung zeichnet sich dadurch aus, dass der Gleichrichter eine Demodulationsvorrichtung aufweist, um ein dem Gleichstromkreis aufmoduliertes Signal zu demodulieren. In dem Fall, dass auch der Gleichrichter eine Demodulationsvorrichtung aufweist, kann der Gleichrichter ein dem Gleichstromkreis aufmoduliertes Signal demodulieren. Dies ermöglicht eine Übertragung von Informationen nicht nur von dem Gleichrichter zu den Wechselrichtern, sondern auch umgekehrt, von den Wechselrichtern zu den Gleichrichtern. Der Gleichrichter kann seine Demodulationsvorrichtung auch zur Selbstdiagnose nutzen, indem er das Signal, das er selbst dem Gleichstromkreis aufmoduliert hat, demoduliert und mit dem ursprünglichen Signal vergleicht. Diese Funktionalität ist unabhängig davon, ob einer der Wechselrichter eine Modulationsvorrichtung aufweist.

Gemäß einer besonders vorteilhaften Weiterbildung der Erfindung ist vorgesehen, dass wenigstens der eine Modulationsvorrichtung aufweisende Wechselrichter oder einer der eine Modulationsvorrichtung aufweisenden Wechselrichter mit einem Notenergiespeicher verbunden ist, wobei durch die Modulationsvorrichtung des wenigstens einen Wechselrichters oder durch wenigstens eine der Modulationsvorrichtungen der Wechselrichter Signale dem Gleichstromkreis aufmodulierbar sind, wobei die Signale Statusinformationen des jeweiligen Notenergiespeichers beinhalten. Sofern einer der Wechselrichter oder alle Wechselrichter einen Zwischenkreiskondensator aufweisen, kann der Notenergiespeicher jeweils direkt mit diesem Zwischenkreiskondensator verbunden sein und somit als eine Erweiterung des Zwischenkreiskondensators dienen. In dem Fall das ein Wechselrichter keinen Zwischenkreiskondensator aufweist, kann der Notenergiespeicher jeweils direkt mit dem Zwischenkreis des jeweiligen Wechselrichters verbunden sein. In diesem Fall ersetzt der Notenergiespeicher den Zwischenkreiskondensator und ist vorteilhafterweise außerhalb des Wechselrichters angeordnet. Hierdurch ist ein einfacher Austausch oder eine Reparatur eines Notenergiespeichers möglich.
Bei einer bevorzugten Ausgestaltung der Erfindung ist vorgesehen, dass die dem Gleichstromkreis aufmodulierbaren Statusinformationen wenigstens eine der Informationen Spannung, Innenwiderstand, Kapazität oder Temperatur umfasst. Umrichtersysteme aus dem Stand der Technik weisen häufig Notenergiespeicher auf, die das Umrichtersystem oder spezielle Komponenten des Umrichtersystems in bestimmten Fällen, zum Beispiel bei einem Ausfall der Wechselstromquelle mit Notenergie versorgen. Da derartige Umrichtersysteme häufig sicherheitsrelevant sind, ist es notwendig die Notenergiespeicher zu überwachen, um einen Ausfall der Notenergiespeicher schnell feststellen zu können oder sogar vorherzusagen. Die Übertragung der hierfür notwendigen Informationen kann erfindungsgemäß über den Gleichstromkreis erfolgen. Hierzu werden Statusinformationen des jeweiligen Notenergiespeichers, die zum Beispiel durch dafür vorgesehene Sensoren gewonnen werden, in Form eines Signals durch die Modulationsvorrichtung dem Gleichstromkreis aufmoduliert. Dieses Signal kann dann durch eine Demodulationsvorrichtung des Gleichrichters und/oder eines anderen Wechselrichters demoduliert werden. Die so gewonnenen Informationen können zum Beispiel an eine übergeordnete Steuerungseinrichtung weitergegeben oder direkt verarbeitet werden.

Gemäß einer weiteren bevorzugten Ausgestaltung der Erfindung ist vorgesehen, dass durch eine Modulationsvorrichtung wenigstens eines Wechselrichters dem Gleichstromkreis Signale aufmodulierbar sind, wobei die Signale Informationen über den jeweiligen Wechselrichter beinhalten.

Darüber hinaus ist es vorteilhaft, wenn die dem Gleichstromkreis aufmodulierbaren Informationen über den jeweiligen Wechselrichter wenigstens eine der Informationen Wechselrichtertyp, Konfigurationsdaten oder Wechselrichter-ID umfasst. Zum effizienten und sicheren Betrieb eines Wechselrichters ist es gegebenenfalls notwendig, dass der verbundene Gelichrichter und/oder die verbundenen anderen Wechselrichter Informationen über den Wechselrichter haben. Insbesondere kann zum Beispiel der Fall eintreten, dass ein Wechselrichter oder mehrere Wechselrichter ausgetauscht und durch einen anderen Typ ersetzt werden. In einem solchen Fall ist es vorteilhaft, diese Informationen an die anderen Komponenten des Umrichtersystems zu übertragen. Die Übertragung dieser notwendigen Informationen kann erfindungsgemäß über den Gleichstromkreis erfolgen. Hierzu werden Informationen über den jeweiligen Wechselrichter in Form eines Signals durch die Modulationsvorrichtung dem Gleichstromkreis aufmoduliert. Dieses Signal kann dann durch eine Demodulationsvorrichtung des Gleichrichters und/oder eines anderen Wechselrichters demoduliert werden. Die so gewonnenen Informationen können zum Beispiel an eine übergeordnete Steuerungseinrichtung weitergegeben oder direkt verarbeitet werden.

Gemäß einer weiteren bevorzugten Weiterbildung der Erfindung ist vorgesehen, dass wenigstens ein Gleichstromenergieverbraucher mit dem Gleichstromkreis verbunden ist, wobei durch diesen einen Gleichstromenergieverbraucher oder durch diese mehreren Gleichstromenergieverbraucher die zu ihrem Betrieb notwendige elektrische Energie direkt als Gleichstrom dem Gleichstromkreis entnehmbar ist.

Erfindungsgemäß können auch Gleichstromenergieverbraucher aus dem Gleichstromkreis mit elektrischer Energie versorgt werden. Es ist vorteilhaft, wenn diese Gleichstromenergieverbraucher eine Demodulationsvorrichtung und/oder eine Modulationsvorrichtung aufweisen, um dem Gleichstromkreis aufmodulierte Signale zu demodulieren bzw. dem Gleichstromkreis Signale aufzumodulieren. Auf diese Weise können Gleichstromenergieverbraucher mit den anderen Komponenten des Umrichtersystems kommunizieren. Insbesondere Sensoren kommen als Gleichstromenergieverbraucher in Frage.

Die zuvor hergeleitete und aufgezeigte Aufgabe ist ausgehend von dem eingangs beschriebenen Pitchsystem ferner dadurch gelöst, dass das Pitchsystem ein Umrichtersystem nach einem dem Ansprüche 1 bis 8 aufweist. Pitchsysteme regeln in einer Windenergieanlage die Stellung der Blätter zum Wind durch Rotation der Blätter um ihre Längsachse. Ein erfindungsgemäßes Pitchsystem hat den Vorteil, dass es besonders kostenkünstig und robust ist.

Die zuvor hergeleitete und aufgezeigte Aufgabe ist ausgehend von dem eingangs beschriebenen Verfahren zum Betrieb eines Umrichtersystems dadurch gelöst, dass der Gleichrichter eine Modulationsvorrichtung aufweist und dem Gleichstromkreis ein Signal aufmoduliert, wobei wenigstens einer der Wechselrichter eine Demodulationsvorrichtung aufweist und ein dem Gleichstromkreis aufmoduliertes Signal demoduliert.

Mittels der Modulationsvorrichtung moduliert der Gleichrichter dem Gleichstromkreis ein Signal auf und dieses Signal wird über den Gleichstromkreis zu den Wechselrichtern übertragen. Die Demodulationsvorrichtung eines Wechselrichters demoduliert das dem Gleichstromkreis aufmodulierte Signal. Auf diese Weise kann kostengünstig eine robuste Informationsübertragung vom Gleichrichter zu einem Wechselrichter erfolgen.

Gemäß einer vorteilhaften Weiterbildung der Erfindung ist vorgesehen, dass wenigstens einer der Wechselrichter eine Modulationsvorrichtung aufweist und dem Gleichstromkreis ein Signal aufmoduliert. Hierdurch können Informationen über den Gleichstromkreis direkt von einem der Wechselrichter zu einem anderen der Wechselrichter übertragen werden.

Eine vorteilhafte Ausgestaltung der Erfindung zeichnet sich dadurch aus, dass der Gleichrichter eine Demodulationsvorrichtung aufweist und ein dem Gleichstromkreis aufmoduliertes Signal demoduliert. Der Gleichrichter kann mittels seiner Demodulationsvorrichtung sowohl sein eigenes Signal, das er zuvor dem Gleichstromkreis aufmoduliert hat, zu Selbstdiagnosezwecken demodulieren oder er kann Signale von den Wechselrichtern empfangen, wodurch eine Kommunikation in beide Richtungen, das heißt vom Gleichrichter zu den Wechselrichtern und umgekehrt, möglich wird.

Gemäß einer besonders vorteilhaften Weiterbildung der Erfindung ist vorgesehen, dass wenigstens der eine Modulationsvorrichtung aufweisende Wechselrichter oder einer der eine Modulationsvorrichtung aufweisenden Wechselrichter mit einem Notenergiespeicher verbunden ist, wobei durch die Modulationsvorrichtung des wenigstens einen Wechselrichters oder durch wenigstens eine der Modulationsvorrichtungen der Wechselrichter Signale dem Gleichstromkreis aufmoduliert werden, wobei die Signale Statusinformationen des jeweiligen Notenergiespeichers beinhalten.

Folglich können Statusinformationen des jeweiligen Notenergiespeichers vom Gleichrichter und/oder von den anderen Wechselrichtern empfangen und weiterverarbeitet oder weitergeleitet werden. Zunächst werden die Statusinformationen als Signal dem Gleichstromkreis durch die Modulationsvorrichtung des Wechselrichters aufmoduliert und darauf durch eine Demodulationsvorrichtung des Gleichrichters und/oder eines anderen Wechselrichters demoduliert.

Bei einer bevorzugten Ausgestaltung der Erfindung ist vorgesehen, dass wenigstens ein Gleichstromenergieverbraucher mit dem Gleichstromkreis verbunden ist, wobei durch diesen einen Gleichstromenergieverbraucher oder durch diese mehreren Gleichstromenergieverbraucher die zu ihrem Betrieb notwendige elektrische Energie direkt als Gleichstrom dem Gleichstromkreis entnommen wird.

Erfindungsgemäß können Gleichstromenergieverbraucher ohne Zwischenschaltung eines Wechselrichter an den Gleichstromkreis angeschlossen werden. Diese Gleichstromenergieverbraucher beziehen die zu ihrem Betrieb notwendige elektrische Energie direkt als Gleichspannung aus dem Gleichstromkreis. Es ist vorteilhaft, wenn diese Gleichstromenergieverbraucher eine Demodulationsvorrichtung und/oder eine Modulationsvorrichtung aufweisen, um dem Gleichstromkreis aufmodulierte Signale zu demodulieren bzw. dem Gleichstromkreis Signale aufzumodulieren. Auf diese Weise können Gleichstromenergieverbraucher mit den anderen Komponenten des Umrichtersystems kommunizieren.

Im Einzelnen gibt es nun eine Vielzahl von Möglichkeiten, das erfindungsgemäße Umrichtersystem auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen.

In der Zeichnung zeigt
Fig. 1 schematisch das erfindungsgemäße Umrichtersystem einer bevorzugten Weiterbildung der Erfindung und
Fig. 2 schematisch einen Teil des erfindungsgemäßen Umrichtersystems nach einer weiteren Ausgestaltung der Erfindung.

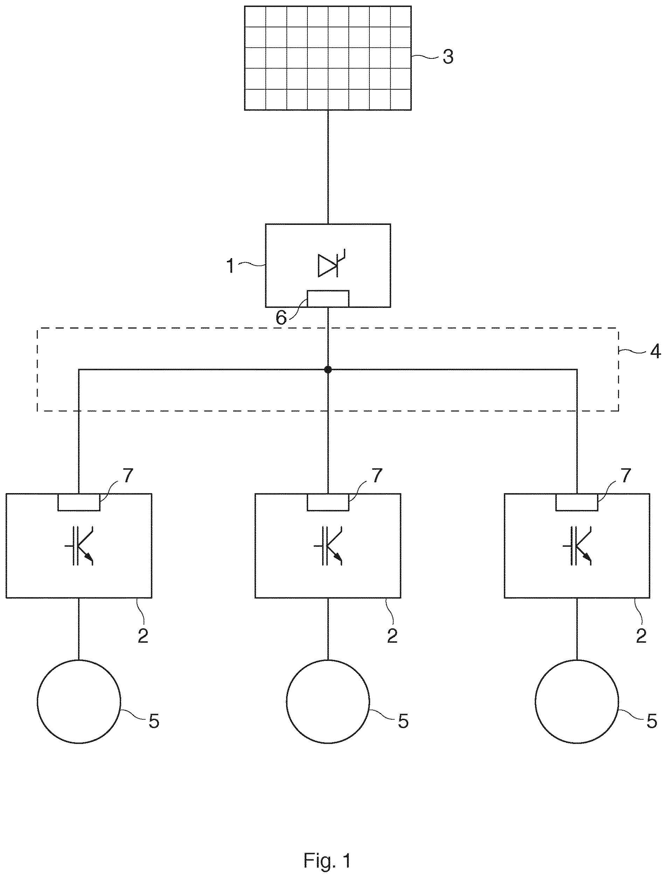

Die Fig. 1 zeigt das erfindungsgemäße Umrichtersystem mit einem Gleichrichter 1 und drei Wechselrichtern 2. Der Gleichrichter 1 ist mit einer Wechselstromquelle 3 verbunden, die beispielsweise durch das Stromnetz gebildet werden kann. Der Gleichrichter 1 richtet den von der Wechselstromquelle 3 bereitgestellten dreiphasigen Wechselstrom gleich und stellt ihn über einen Gleichstromkreis 4 den Wechselrichtern 2 zur Verfügung. Die Wechselrichter 2 sind mit elektrischen Verbrauchern 5 verbunden, die von den Wechselrichtern 2 mit Energie versorgt werden. Die elektrischen Verbraucher 5 können zum Beispiel Gleichstrommotoren oder Wechselstrommotoren umfassen.

Der Gleichrichter 1 weist eine Modulationsvorrichtung 6 auf, mit der Signale dem Gleichstromkreis 4 aufmoduliert werden können. Über den Gleichstromkreis 4 liegen die Signale an allen drei Wechselrichtern 2 an. Die Wechselrichter 2 weisen je eine Demodulationsvorrichtung 7 auf, mit der dem Gleichstromkreis 4 aufmodulierte Signale demoduliert werden können. Das über den Gleichstromkreis 4 vom Gleichrichter 1 an die Wechselrichter 2 übertragene Signal kann zum Beispiel ein einfaches Ein-/Aus-Signal sein, das zur Steuerung der Wechselrichter 2 verwendet wird, so dass beim Signal "Ein" die Wechselrichter 2 den jeweils angeschlossenen elektrischen Verbraucher 5 mit Energie versorgen und beim Signal "Aus" die Wechselrichter 2 den jeweils angeschlossenen elektrischen Verbraucher 5 nicht mit Energie versorgen. Insbesondere, wenn die elektrischen Verbraucher 5 durch Elektromotoren gebildet werden, können auch deutlich komplexere Signale über den Gleichstromkreis 4 übertragen werden.

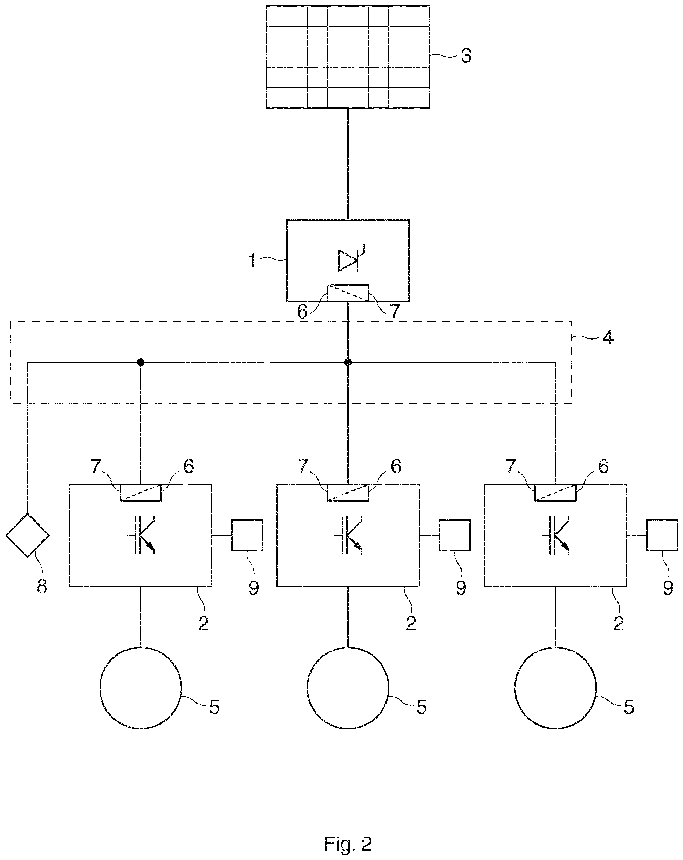

Die in Fig. 2 dargestellte weitere Ausgestaltung der Erfindung zeichnet sich im Vergleich zu Fig. 1 insbesondere durch weitere Modulationsvorrichtungen 6 und Demodulationsvorrichtungen 7 aus. Sowohl der Gleichrichter 1 als auch alle drei Wechselrichter 2 weisen je eine Modulationsvorrichtung 6 und eine Demodulationsvorrichtung 7 auf. Hierdurch wird ermöglicht, dass sowohl der Gleichrichter 1 als auch die Wechselrichter 7 dem Gleichstromkreis Signale aufmodulieren können und dem Gleichstromkreis aufmodulierte Signale demodulieren können. Somit ist es möglich, dass diese vier Bauteile, der Gleichrichter 1 und die drei Wechselrichter 2, untereinander Informationen austauschen, indem sie Signale über den Gleichstromkreis 4 verbreiten. Durch diese mehrfache Nutzung des Gleichstromkreises 4, einerseits zur Energieübertragung und andererseits zur Informationsübertragung, werden Kosten für separate Signalleitungen zur Informationsübertragung eingespart.

An den Gleichstromkreis 4 ist ein Gleichstromenergieverbraucher 8 direkt angeschlossen. Dieser Gleichstromenergieverbraucher 8 entnimmt dem Gleichstromkreis 4 elektrische Energie direkt in Form von Gleichstrom. Bedarfsweise kann zur Spannungsanpassung auch ein Gleichspannungswandler zwischen dem Gleichstromkreis 4 und dem Gleichstromenergieverbraucher 8 vorgesehen sein, um die Spannung des Gleichstromkreises 4 an die benötigte Eingangsspannung des Gleichstromenergieverbrauchers 8 anzupassen. Vorteilhafterweise weist der Gleichstromenergieverbraucher eine Modulationsvorrichtung und/oder eine Demodulationsvorrichtung auf. Auf diese Weise kann der Gleichstromenergieverbraucher 8 mit den anderen an den Gleichstromkreis 4 angeschlossenen Komponenten kommunizieren.

In Fig. 2 dargestellten Wechselrichter 2 sind mit je einem Notenergiespeicher 9 verbunden. Als Notenergiespeicher 9 kommen insbesondere Batterien oder Kondensatoren, hierbei vor allem sogenannte Ultracaps, in Frage. Durch die Notenergiespeicher 9 können die Wechselrichter bei Bedarf mit Noteenergie versorgt werden. Ein derartiger Bedarf kann zum Beispiel auftreten, wenn die Wechselstromquelle 3 ausfällt oder aus anderen Gründen die Energieversorgung der Wechselrichter 2 aus dem Gleichstromkreis 4 nicht mehr gewährleistet ist. Die von den Notenergiespeichern 9 bereitgestellte Energie kann von den Wechselrichtern 2 verwendet werden, um die elektrischen Verbraucher 5 mit elektrischer Energie zu versorgen. Über die Modulationsvorrichtungen 6 können die Wechselrichter 2 Signale dem Gleichstromkreis 4 aufmodulieren, die Statusinformationen über die Notenergiespeicher 9 beinhalten, wie z. B. die Spannung, den Innenwiderstand, die Kapazität oder die Temperatur eines Notenergiespeichers 9.

### Bezugszeichenliste

- 1: Gleichrichter
- 2: Wechselrichter
- 3: Wechselstromquelle
- 4: Gleichstromkreis
- 5: Elektrischer Verbraucher
- 6: Modulationsvorrichtung
- 7: Demodulationsvorrichtung
- 8: Gleichstromenergieverbraucher
- 9: Notenergiespeicher

## Patentansprüche

1. Umrichtersystem eines Pitchsystems einer Windkraftanlage mit einem Gleichrichter (1) und wenigstens zwei Wechselrichtern (2), wobei der Gleichrichter (1) von einer Wechselstromquelle (3) mit Energie versorgbar ist, der Gleichrichter (1) zur Energieversorgung mit jedem der Wechselrichter über einen gemeinsamen Gleichstromkreis (4) verbunden ist und jeder Wechselrichter (2) mit jeweils mindestens einem elektrischen Verbraucher (5) zur Energieversorgung des jeweiligen Verbrauchers (5) oder der jeweiligen Verbraucher (5) verbindbar ist,
**dadurch gekennzeichnet,**
**dass** wenigstens einer der Wechselrichter (2) eine Modulationsvorrichtung (6) aufweist, um dem Gleichstromkreis (4) ein Signal aufzumodulieren und dass der Gleichrichter (1) eine Demodulationsvorrichtung (7) aufweist, um ein dem Gleichstromkreis (4) aufmoduliertes Signal zu demodulieren, oder wenigstens ein anderer der Wechselrichter (2) eine Demodulationsvorrichtung (7) aufweist, um ein dem Gleichstromkreis (4) aufmoduliertes Signal zu demodulieren.

2. Umrichtersystem nach Anspruch 1, **dadurch gekennzeichnet, dass** wenigstens der eine Modulationsvorrichtung (6) aufweisende Wechselrichter (2) oder einer der eine Modulationsvorrichtung (6) aufweisenden Wechselrichter (2) mit einem Notenergiespeicher (9) verbunden ist, wobei durch die Modulationsvorrichtung (6) des wenigstens einen Wechselrichters (2) oder durch wenigstens eine der Modulationsvorrichtungen (6) der Wechselrichter (2) Signale dem Gleichstromkreis (4) aufmodulierbar sind, wobei die Signale Statusinformationen des jeweiligen Notenergiespeichers (9) beinhalten.

3. Umrichtersystem nach Anspruch 2, **dadurch gekennzeichnet, dass** die dem Gleichstromkreis (4) aufmodulierbaren Statusinformationen wenigstens eine der Informationen Spannung, Innenwiderstand, Kapazität oder Temperatur umfasst.

4. Umrichtersystem nach einem der Ansprüche 1 bis 3, **dadurch gekennzeichnet, dass** durch eine Modulationsvorrichtung (6) wenigstens eines Wechselrichters (2) dem Gleichstromkreis (4) Signale aufmodulierbar sind, wobei die Signale Informationen über den jeweiligen Wechselrichter (2) beinhalten.

5. Umrichtersystem nach Anspruch 4, **dadurch gekennzeichnet, dass** die dem Gleichstromkreis (4) aufmodulierbaren Informationen über den jeweiligen Wechselrichter (2) wenigstens eine der Informationen Wechselrichtertyp, Konfigurationsdaten oder Wechselrichter-ID umfasst.

6. Umrichtersystem nach einem der Ansprüche 1 bis 5, **dadurch gekennzeichnet, dass** wenigstens ein Gleichstromenergieverbraucher (8) mit dem Gleichstromkreis (4) verbunden ist, wobei durch diesen einen Gleichstromenergieverbraucher (8) oder durch diese mehreren Gleichstromenergieverbraucher (8) die zu ihrem Betrieb notwendige elektrische Energie direkt als Gleichstrom dem Gleichstromkreis (4) entnehmbar ist.

7. Verfahren zum Betrieb eines Umrichtersystems in einem Pitchsystem einer Windkraftanlage mit einem Gleichrichter (1) und wenigstens zwei Wechselrichtern (2), wobei der Gleichrichter (1) von einer Wechselstromquelle (3) mit Energie versorgt wird, der Gleichrichter (1) zur Energieversorgung mit jedem der Wechselrichter (2) über einen gemeinsamen Gleichstromkreis (4) verbunden ist und jeder Wechselrichter (2) mit jeweils einem elektrischen Verbraucher (5) zur Energieversorgung des jeweiligen Verbrauchers (5) verbunden ist,
**dadurch gekennzeichnet,**
**dass** wenigstens einer der Wechselrichter (2) eine Modulationsvorrichtung (6) aufweist, um dem Gleichstromkreis (4) ein Signal aufzumodulieren und dass der Gleichrichter (1) eine Demodulationsvorrichtung (7) aufweist und ein dem Gleichstromkreis (4) aufmoduliertes Signal zu demodulieren, oder wenigstens ein anderer der Wechselrichter (2) eine Demodulationsvorrichtung (7) aufweist um ein dem Gleichstromkreis (4) aufmoduliertes Signal zu demodulieren.

8. Verfahren zum Betrieb eines Umrichtersystems nach Anspruch 7, **dadurch gekennzeichnet, dass** wenigstens der eine Modulationsvorrichtung (6) aufweisende Wechselrichter (2) oder einer der eine Modulationsvorrichtung (6) aufweisenden Wechselrichter (2) mit einem Notenergiespeicher (9) verbunden ist, wobei durch die Modulationsvorrichtung (6) des wenigstens einen Wechselrichters (2) oder durch wenigstens eine der Modulationsvorrichtungen (6) der Wechselrichter (2) Signale dem Gleichstromkreis (4) aufmoduliert werden, wobei die Signale Statusinformationen des jeweiligen Notenergiespeichers (9) beinhalten.

9. Verfahren zum Betrieb eines Umrichtersystems nach einem der Ansprüche 7 bis 8, **dadurch gekennzeichnet, dass** wenigstens ein Gleichstromenergieverbraucher (8) mit dem Gleichstromkreis (4) verbunden ist, wobei durch diesen einen Gleichstromenergieverbraucher (8) oder durch diese mehreren Gleichstromenergieverbraucher (8) die zu ihrem Betrieb notwendige elektrische Energie direkt als Gleichstrom dem Gleichstromkreis (4) entnommen wird.

## Claims

1. Converter system of a pitch system of a wind power installation, with a rectifier (1) and at least two inverters (2), wherein the rectifier (1) can be supplied with power by an alternating current source (3), the rectifier (1) is connected with each of the inverters via a common direct current circuit (4) to supply power, and each inverter (2) can be connected with at least one respective electrical load (5) to supply power to the respective load (5) or the respective loads (5),
**characterized in that**
at least one of the inverters (2) has a modulation device (6) in order to modulate a signal around the direct current circuit (4), and **in that** the rectifier (1) has a demodulation device (7) in order to demodulate a signal modulated on the direct current circuit (4), or has at least one demodulation device (7) other than the inverters (2) in order to demodulate a signal modulated on the direct current circuit (4).

2. Converter system according to claim 1, **characterized in that** at least the inverter (2) having a modulation device (6) or one of the inverters (2) having a modulation device (6) is connected with an emergency power storage (9), wherein signals can be modulated on the direct current circuit (4) via the modulation device (6) of the at least one inverter (2) or via at least one of the modulation devices (6) of the inverters (2), wherein the signals contain status information of the respective emergency power storage (9).

3. Converter system according to claim 2, **characterized in that** the status information that can be modulated on the direct current circuit (4) includes at least one of the following items of information: voltage, internal resistance, capacitance, or temperature.

4. Converter system according to any of the claims 1 to 3, **characterized in that** signals that can be modulated on the direct current circuit (4) by a modulation device (6) of at least one inverter (2), wherein the signals include information about the respective inverter (2).

5. Converter system according to claim 4, **characterized in that** the information about the respective inverter (2) that can be modulated on the direct current circuit (4) includes at least one of the following items of information: inverter type, configuration data, or inverter ID.

6. Converter system according to any of the claims 1 to 5, **characterized in that** at least one direct current power load (8) is connected with the direct current circuit (4), whereby the electrical power necessary for the operation of this direct current load (8) or these direct current power loads (8) can be directly drawn as direct current from the direct current circuit (4) by this one direct current power load (8) or by these multiple direct current power loads (8).

7. Method for operation of a converter system in a pitch system of a wind power installation, with a rectifier (1) and at least two inverters (2), wherein the rectifier (1) is supplied with power by an alternating current source (3), the rectifier (1) is connected with each of the inverters (2) via a common direct current circuit (4) to supply power, and each inverter (2) is connected with a respective electrical load (5) to supply power to the respective load (5),
**characterized in that**
at least one of the inverters (2) has a modulation device (6) in order to modulate a signal around the direct current circuit (4), and **in that** the rectifier (1) has a demodulation device (7) and [sic] to demodulate a signal modulated on the direct current circuit (4), or has at least one demodulation device (7) other than the inverters (2) in order to demodulate a signal modulated on the direct current circuit (4).

8. Method for operating a converter system according to claim 7, **characterized in that** at least the inverter (2) having a modulation device (6) or one of the inverters (2) having a modulation device (6) is connected with an emergency power storage (9), wherein signals are modulated on the direct current circuit (4) via the modulation device (6) of the at least one inverter (2) or via at least one of the modulation devices (6) of the inverters (2), wherein the signals contain status information of the respective emergency power storage (9).

9. Method for operation of a converter system according to any of the claims 7 to 8, **characterized in that** at least one direct current power load (8) is connected with the direct current circuit (4), whereby the electrical power necessary for the operation of this direct current load (8) or these direct current power loads (8) is directly drawn as direct current from the direct current circuit (4) by this one direct current power load (8) or by these multiple direct current power loads (8).

## Revendications

1. Système de convertisseur d'un système de pitch d'une installation éolienne dotée d'un convertisseur (1) et au moins deux onduleurs (2), le convertisseur (1) pouvant être alimenté en énergie par une source (3) de courant alternatif, le convertisseur (1) étant connecté, pour l'alimentation en énergie, à chacun des onduleurs via un circuit (4) de courant continu commun et chaque onduleur (2) pouvant être connecté à chaque fois à au moins un consommateur électrique (5) pour l'alimentation en énergie du consommateur (5) respectif ou des consommateurs (5) respectifs,
**caractérisé en ce que,**
au moins un des onduleurs (2) présente un dispositif de modulation (6) pour moduler un signal sur le circuit (4) de courant continu et **en ce que** le convertisseur (1) présente un dispositif de démodulation (7) pour démoduler un signal modulé sur le circuit (4) de courant continu ou au moins un autre des onduleurs (2) présente un dispositif de démodulation (7) pour démoduler un signal modulé sur le circuit (4) de courant continu.

2. Système de convertisseur selon la revendication 1, **caractérisé en ce que** ledit au moins un onduleur (2) présentant un dispositif de modulation (6) ou un des onduleurs (2) présentant un dispositif de modulation (6) est connecté à un accumulateur de secours (9), des signaux pouvant être modulés sur le circuit (4) de courant continu par le dispositif de modulation (6) dudit au moins un onduleur (2) ou par au moins un des dispositifs de modulation (6) des onduleurs (2), les signaux contenant des informations de statut de l'accumulateur de secours (9) respectif.

3. Système de convertisseur selon la revendication 2, **caractérisé en ce que** les informations de statut modulées sur le circuit (4) de courant continu comprennent au moins une des informations tension, résistance interne, capacité ou température.

4. Système de convertisseur selon l'une quelconque des revendications 1 à 3, **caractérisé en ce qu'**un dispositif de modulation (6) d'au moins un onduleur (2) permet de moduler des signaux sur le circuit (4) de courant continu, les signaux comprenant des informations sur l'onduleur (2) respectif.

5. Système de convertisseur selon la revendication 4, **caractérisé en ce que** les informations sur l'onduleur (2) respectif, modulables sur le circuit (4) de courant continu, comprennent au moins une des informations type d'onduleur, données de configuration ou ID de l'onduleur.

6. Système de convertisseur selon l'une quelconque des revendications 1 à 5, **caractérisé en ce qu'**au moins un consommateur (8) d'énergie à courant continu est connecté au circuit (4) de courant continu, l'énergie électrique nécessaire pour le fonctionnement de ce consommateur (8) d'énergie à courant continu ou de ces plusieurs consommateurs (8) d'énergie à courant continu peut être prélevée directement sous forme de courant continu du circuit (4) de courant continu.

7. Procédé pour le fonctionnement d'un système de convertisseur dans un système de pitch d'une installation éolienne, présentant un convertisseur (1) et au moins deux onduleurs (2), le convertisseur (1) étant alimenté en énergie par une source (3) de courant alternatif, le convertisseur (1) étant connecté, pour l'alimentation en énergie, à chacun des onduleurs (2) via un circuit (4) de courant continu commun et chaque onduleur (2) étant connecté à chaque fois à au moins un consommateur électrique (5) pour l'alimentation en énergie du consommateur (5) respectif,
**caractérisé en ce que,**
au moins un des onduleurs (2) présente un dispositif de modulation (6) pour moduler un signal sur le circuit (4) de courant continu et **en ce que** le convertisseur (1) présente un dispositif de démodulation (7) pour démoduler un signal modulé sur le circuit de courant continu (4) ou au moins un autre des onduleurs (2) présente un dispositif de démodulation (7) pour démoduler un signal modulé sur le circuit de courant continu (4).

8. Procédé pour le fonctionnement d'un système de convertisseur selon la revendication 7, **caractérisé en ce que** ledit au moins un onduleur (2) présentant un dispositif de modulation (6) ou un des onduleurs (2) présentant un dispositif de modulation (6) est connecté à un accumulateur de secours (9), des signaux étant modulés sur le circuit (4) de courant continu par le dispositif de modulation (6) dudit au moins un onduleur (2) ou par au moins un des dispositifs de modulation (6) des onduleurs (2), les signaux contenant des informations de statut de l'accumulateur de secours (9) respectif.

9. Procédé pour le fonctionnement d'un système de convertisseur selon l'une quelconque des revendications 7 à 8, **caractérisé en ce qu'**au moins un consommateur (8) d'énergie à courant continu est connecté au circuit (4) de courant continu, l'énergie électrique nécessaire pour le fonctionnement de ce consommateur (8) d'énergie à courant continu ou de ces plusieurs consommateurs (8) d'énergie à courant continu est prélevée directement sous forme de courant continu du circuit (4) de courant continu.
